# FASCICULE DE BREVET EUROPEEN

(11) **EP 1 351 044 B1**
(45) Date de publication et mention de la délivrance du brevet: **10.09.2008**
(21) Numéro de dépôt: 03101198.4
(22) Date de dépôt: 15.04.1998
(51) Int. Cl.: G01L 9/00

(54) **Microsystème à membrane souple pour capteur de pression**
Mikrosystem mit flexibler Membran zur Erfassung von Drücken
Microsystem with a flexible membrane for pressure sensing

(30) Priorité: 17.04.1997 FR 9704767
(43) Date de publication de la demande: 08.10.2003
(62) Demande divisionnaire de: 98400931.6
(73) Titulaire: COMMISSARIAT A L'ENERGIE ATOMIQUE, 75015 Paris (FR)
(72) Inventeur: DELAYE, Marie-Thérèse, 38100, GRENOBLE (FR)
(74) Mandataire: Poulin, Gérard

(56) Documents cités:
- EP-A- 0 351 791
- US-A- 5 453 628
- US-A- 5 471 723
- US-A- 5 573 679

## Description

### Domaine technique

La présente invention concerne un microsystème à membrane souple pour capteur de pression.

On entend par microsystème à membrane souple aussi bien une cellule de capteur de pression, par exemple, du type à mesure capacitive, qu'une cellule d'interrupteur déclenché par la pression.

L'invention trouve des applications dans la fabrication de microcapteurs, de micro-interrupteurs de micro-condensateurs variables, et de façon plus générale de micro-composants pouvant être réalisés de façon intégrée avec un circuit électronique associé. Une application particulière de l'invention est la fabrication d'un capteur d'empreintes.

### Etat de la technique antérieure

FR-A-2 700 003 décrit la réalisation de microcapteurs de pression avec une membrane en silicium déformable.

De tels microcapteurs présentent en raison de leur procédé de fabrication des difficultés de compatibilité avec la réalisation conjointe de circuits intégrés de type CMOS. Par ailleurs, ces capteurs comprennent une membrane généralement conductrice, ce qui peut poser des problèmes d'isolation électrique dans le cas d'une miniaturisation des composants.

On connaît également des capteurs à membrane isolante réalisés sur des substrats de verre. De tels capteurs sont par exemple décrits dans EP-A-0 645 613.

EP-A-0 351 701 décrit un capteur de pression qui comprend un corps de base isolant et un diaphragme isolant qui sont assemblés en parallèle et à une certaine distance l'un de l'autre pour former une chambre fermée, un élément annulaire de métal étant disposé entre eux. Une première électrode est formée sur le corps de base, et une seconde électrode est formée sur le diaphragme en face de la première électrode. Les contacts des électrodes sont pris sur les deux faces opposées à la chambre du capteur.

L'article de J. Jason et F. Chang: "A surface micromachined miniature switch for telecommunication applications with signal frequencies from DC up to 4 GHz", International Conférence on Solid State, Sensors and Actuators, Stockholm, Sweden, 25. - 29. Juin 1995, montre la réalisation d'un interrupteur, dont les contacts sont juxtaposés sur un même substrat et associés à des circuits électroniques. En appuyant une pièce conductrice sous forme d'un cantilever, la connexion des deux contacts est réalisée. Une telle conception est particulièrement avantageuse notamment dans le cadre d'une fabrication en série.

Toutefois, elle présente un certain nombre de limitations liées aux problèmes d'interconnexion entre les contacts et les circuits électroniques correspondants. En effet, les liaisons électriques entre les capteurs et les circuits intégrés disposés sur le même substrat engendrent des effets néfastes de capacité parasite. Par ailleurs, les liaisons électriques apparaissent comme encombrantes et constituent un obstacle à une miniaturisation accrue des dispositifs.

Enfin, la réalisation séparée des capteurs et des circuits électroniques associés se traduit par des coûts de fabrication élevés.

### Exposé de l'invention

L'invention a pour but

de réduire notablement l'encombrement des microsystèmes et des circuits électroniques associés.

Un but est aussi de proposer des capteurs de pression ou des micro-interrupteurs intégrés pouvant être agencés sous la forme d'un grand nombre de cellules juxtaposées, par exemple, sous forme de matrice.

Un but est encore de proposer un détecteur d'empreintes utilisant de tels capteurs.

Enfin, un but est de réduire le coût de fabrication des microsystèmes à membrane souple.

Pour atteindre ces buts, l'invention concerne une cellule de capteur de pression comportant :
- un substrat comportant au moins une première électrode,
- une membrane déformable isolante fixée par un bord périphérique au substrat et définissant une chambre fermée autour d'au moins une partie de la première électrode,
- une seconde électrode formée sur une paroi de la membrane déformable, tournée vers la première électrode, et maintenue séparée de la première électrode en l'absence de pression exercée sur la membrane, dans laquelle les contacts des électrodes sont pris sur une même face de la cellule de capteur, face en contact avec le substrat.

La cellule de capteur de pression peut en outre comporter ou être associée à un circuit de mesure électronique intégré dans le substrat et relié aux première et deuxième électrodes.

De façon avantageuse, le circuit électronique peut être disposé dans le substrat sous la première électrode.

Grâce à cette caractéristique, une meilleure intégration de la cellule et du circuit intégré peut être obtenue.

Ceci permet notamment de réaliser un capteur d'empreintes comportant une pluralité de cellules de capteur juxtaposées, par exemple sous forme matricielle. L'ensemble des cellules et des circuits électroniques associés peut alors être réalisé sur ou dans un même support.

Il convient de souligner que les microsystèmes et cellules conformes à l'invention sont particulièrement adaptés pour une utilisation avec des circuits intégrés de type CMOS (Complementary Metal Oxide Semiconductor) ou BiCMOS (BipolarCMOS).

D'autres caractéristiques et avantages de l'invention ressortiront mieux de la description qui va suivre, en référence aux figures des dessins annexés. Cette description est donnée à titre purement illustratif et non limitatif.

### Brève description des figures

- les figures 1 à 8 sont des coupes schématiques illustrant des étapes successives d'un procédé de fabrication d'un microsystème, conforme à l'invention.
- Les figures 9 et 10 montrent en coupe une étape d'amincissement local d'une couche de matériau sacrificiel,
- les figures 11 et 12 montrent en coupe une variante de l'étape de réalisation de la couche de matériau sacrificiel,
- les figures 13 et 14 montrent en coupe encore une autre variante de l'étape de réalisation de la couche de matériau sacrificiel,
- la figure 15 est une coupe schématique, à plus grande échelle, d'un microsystème conforme à l'invention, constituant une variante de celui de la figure 8,
- la figure 16 est une coupe schématique, à plus grande échelle, d'un microsystème conforme à l'invention constituant une variante de celui de la figure 15.

### Description détaillée de modes de mise en oeuvre de l'invention.

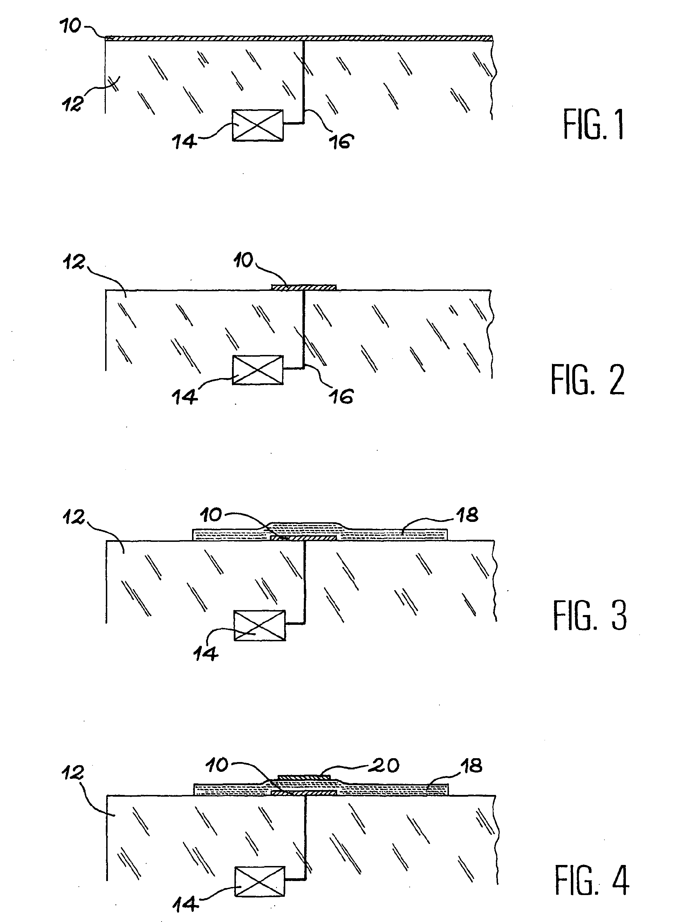

La figure 1 montre une première étape d'un procédé de fabrication d'un capteur de pression conforme à l'invention. Une première couche 10 d'un matériau conducteur tel que, par exemple, du titane, du nitrure de titane, du chrome ou tout autre conducteur compatible, est déposée sur un support 12. La couche 10 est déposée par exemple par pulvérisation cathodique ou par évaporation sous vide avec une épaisseur de l'ordre de 100 nm à quelques micromètres. La couche 10 peut également être formée selon toute autre technique de dépôt telle que l'électrolyse, par exemple.

Le support 12 peut être une plaque de substrat, par exemple en silicium, ou en verre, et en particulier une plaque à circuits intégrés. De façon avantageuse, le support 12 contient un ou plusieurs circuits électroniques, tels que des circuits de mesure destinés aux microsystèmes réalisés conformément à l'invention. Ces circuits, préférentiellement du type CMOS ou BiCMOS sont représentés de façon schématique avec la référence 14 sur la figure. La référence 16 désigne une liaison électrique entre le circuit électronique 14 et la première couche conductrice 10.

Une étape de photolithographie et de gravure sèche ou chimique permet de mettre en forme la première couche de matériau conducteur 10 comme le montre la figure 2. La couche de conductrice 10 mise en forme constitue une première électrode du microsystème désignée par la même référence 10 pour des raisons de simplification.

Une étape ultérieure illustrée à la figure 3 comprend le dépôt et la mise en forme d'une couche 18 de matériau sacrificiel. La forme et l'épaisseur de cette couche définissent les dimensions d'une chambre du microsystème permettant la déformation d'une membrane flexible décrite ultérieurement. L'épaisseur de la couche sacrificielle est par exemple comprise entre 0,1 µm et 5 µm. La couche de matériau sacrificiel est réalisée en un matériau présentant une bonne sélectivité de gravure par rapport aux autres matériaux utilisés pour la réalisation du microsystème. Le matériau de la couche sacrificielle est aussi choisi pour sa capacité à être gravé sur le grandes distances à partir d'un endroit donné.

La couche sacrificielle peut être réalisée en un métal tel que le tungstène ou l'aluminium, en un matériau organique tel que les résines photosensibles ou le polyimide, en un matériau diélectrique tel que l'oxyde de silicium (SiO₂) ou en tout matériau présentant les qualités indiquées ci-dessus.

Une deuxième couche de matériau conducteur est formée au-dessus de la couche de matériau sacrificiel puis est mise en forme par gravure pour former une deuxième électrode.

Cette deuxième électrode est représentée à la figure 4 avec la référence 20. Elle est située au moins partiellement au-dessus de la première électrode 10 et en est séparée par la couche de matériau sacrificiel. La deuxième couche de matériau conducteur est réalisée par exemple en Ti, TiN ou Cr avec une épaisseur de l'ordre de 100 nm à quelques µm. Elle est réalisée selon des techniques de pulvérisation cathodique, d'évaporation ou d'électrolyse.

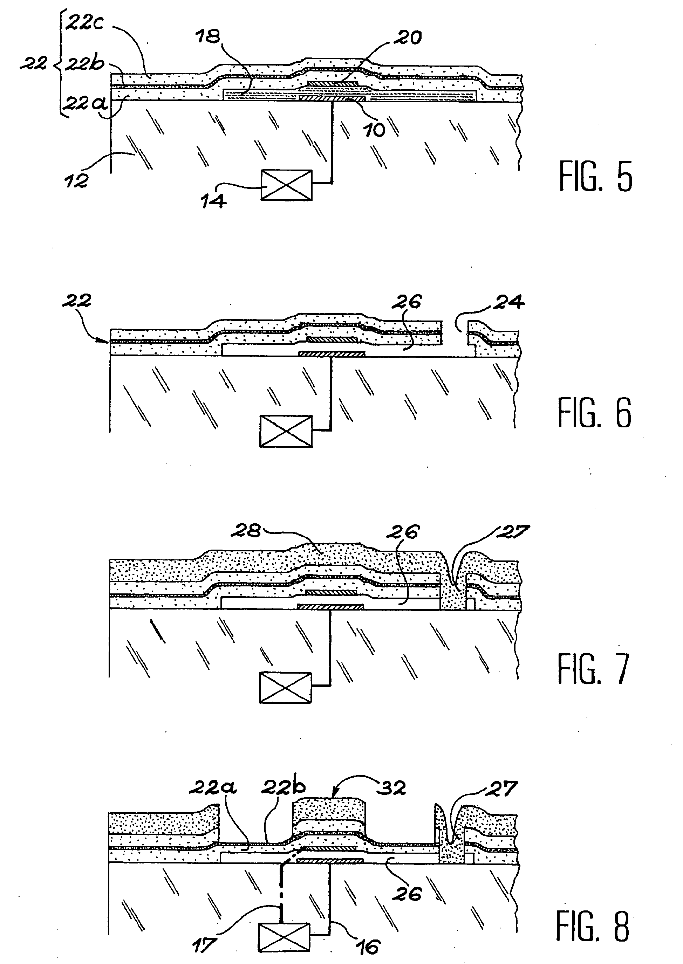

Une étape ultérieure du procédé, représentée à la figure 5 comprend la formation d'une première couche 22 dite de membrane. La couche de membrane 22 recouvre la deuxième électrode 20, la couche de matériau sacrificiel 18 et s'étend au moins en partie sur la surface du support 12.

La première couche de membrane 22 peut être une monocouche en un matériau isolant électrique. Il s'agit par exemple d'une couche de Si₃N₄ d'une épaisseur de 0,8 µm déposée selon une technique de dépôt chimique en phase vapeur assistée par plasma (PECVD). Elle peut aussi, comme le montre la figure 5 présenter une structure feuilletée avec trois sous-couches 22a, 22b et 22c. La sous-couche médiane 22b est une sous-couche d'arrêt de gravure utilisée lors d'un amincissement ultérieur de la première couche de membrane. Cet amincissement est décrit dans la suite du texte.

A titre d'exemple, une couche de membrane 22, d'une épaisseur totale de 0,76 µm peut comporter une sous-couche 22a de 0,3 µm de Si₃N₄, une sous-couche d'arrêt 22b de 0,06 µm de SiO₂ et une sous-couche 22c de 0,4 µm de Si₃N₄. La sous-couche d'arrêt de gravure peut être également une couche métallique. Elle est alors isolée de la deuxième électrode 20 par une première sous-couche 22a en un matériau isolant électrique.

Comme le montre la figure 6, une ouverture 24, formant un canal de gravure, est pratiquée dans la membrane 22 pour atteindre une région périphérique de la couche de matériau sacrificiel. A travers cette ouverture 24 la couche sacrificielle est entièrement éliminée par exemple par attaque chimique. L'élimination du matériau sacrificiel libère une chambre 26 du microsystème qui permet la déformation de la couche de membrane 22. La deuxième électrode 20 reste adhérente à la couche de membrane 22 qui la maintient séparée de la première électrode 10.

Une deuxième couche de membrane 28 est ensuite déposée sur la première couche de membrane 22 pour reboucher l'ouverture 24 et fermer ainsi la chambre 26.

La deuxième couche de membrane est de préférence une couche de SiO₂, Si₃N₄ Il s'agit par exemple d'une couche de Si₃N₄ d'une épaisseur de 0,8 µm déposée par une technique de dépôt de vapeur chimique assistée par plasma PECVD.

L'épaisseur de la deuxième couche de membrane 26 est de façon générale choisie suffisante pour obturer l'ouverture 24 pratiquée dans la première couche de membrane. On peut noter sur la figure 7 la formation d'un bouchon 27 qui prend éventuellement appui sur la surface du support 12. Lorsque l'ouverture 24 est pratiquée dans une région périphérique, un tel bouchon ne compromet pas la flexibilité de la (ou des) couche(s) de membrane.

Préférentiellement, la formation de la deuxième couche de membrane 28 peut être réalisée sous vide pour obtenir une chambre 26 étanche sous vide.

Une étape suivante, montrée à la figure 8, consiste à éliminer la deuxième couche de membrane 26 dans une région entourant la deuxième électrode 20 et à amincir la première couche de membrane dans la même région.

L'amincissement peut être effectué par exemple par gravure avec arrêt sur la sous-couche d'arrêt 22b décrite précédemment.

L'épaisseur restante de la première couche de membrane est alors de l'ordre de 0,3 à 0,4 µm. Cette épaisseur peut être ajustée en fonction de la taille de la chambre 26, de la nature des matériaux utilisés pour la couche de membrane et en fonction d'une sensibilité du microsystème réalisé.

En effet, l'ajustage de l'épaisseur conditionne la flexibilité de la membrane. Toutefois, la première couche de membrane est préférentiellement maintenue suffisamment épaisse pour éviter un effondrement dans la chambre 26, notamment lorsque la chambre 26 est maintenue sous vide.

Par ailleurs, une partie 32 de la première couche de membrane et éventuellement de la deuxième couche de membrane peut être préservée au-dessus de la deuxième électrode 20 afin d'éviter sa déformation.

De la même façon, une partie de la deuxième couche de membrane est également préservée dans la région de l'ouverture 24 et du bouchon 27.

Il convient enfin de noter qu'une liaison électrique 37 représentée très schématiquement en trait mixte sur la figure 8 est prévue entre la deuxième électrode 20 et le circuit électronique 14.

Le circuit électronique 14 est, par exemple, équipé de moyens de mesure d'une capacité électrique entre les première et deuxième électrodes 10, 20. Une pression exercée sur la membrane provoque sa déformation et une modification de la distance séparant les électrodes, et partant, d'une capacité électrique mesurée entre ces électrodes.

Les première et deuxième électrodes peuvent également constituer des bornes de contact lorsque le microsystème est utilisé comme micro-interrupteur.

Dans ce cas, pour assurer un bon contact entre les première et deuxième électrodes, lorsque le micro-interrupteur est actionné, il est avantageux qu'au moins l'une des première et deuxième électrodes fassent saillie sur leur surface de support.

La forme de la deuxième électrode dépend de la forme de la deuxième couche conductrice formée sur la couche de matériau sacrificiel et par conséquent de la forme donnée à la surface supérieure de la couche de matériau sacrificiel.

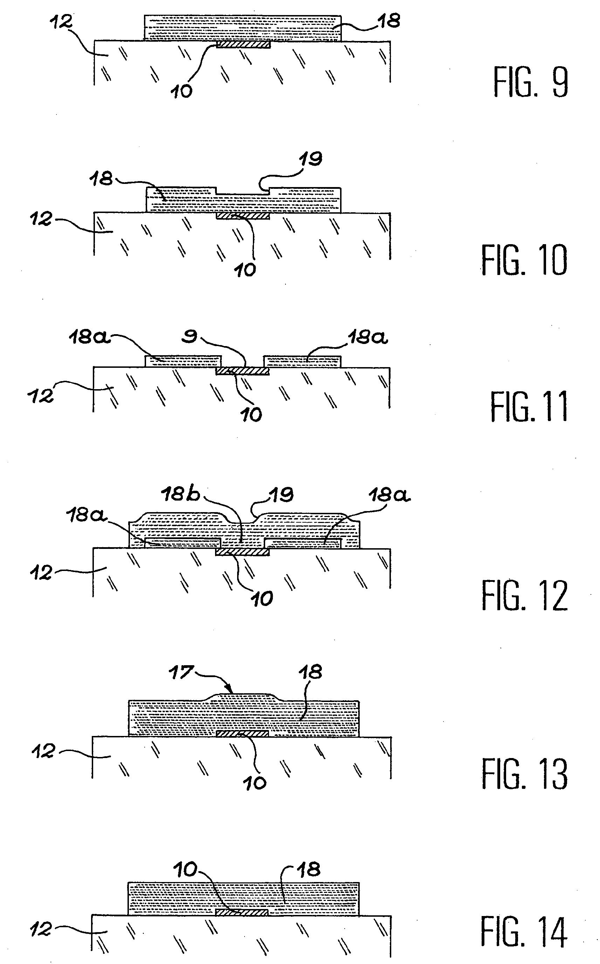

Dans le cas de la figure 9, une couche de matériau sacrificiel 18 est formée au-dessus d'une première électrode 10 dont la surface est affleurante à celle du support 12. La surface de la couche sacrificielle est donc plane. Pour une meilleure lisibilité l'épaisseur de la couche de matériau sacrificiel est représentée plus grande sur les figures 9 à 14.

Une empreinte 19 gravée dans la surface supérieure de la couche 18 de matériau sacrificiel, comme le montre la figure 10, permet de former, lors d'une étape ultérieure, une deuxième couche de matériau conducteur qui fait saillie vers la première électrode 10.

Pour réaliser l'empreinte 19 une deuxième technique est proposée. Cette technique consiste, comme le montre la figure 11, à former d'abord une première couche de matériau sacrificiel 18a qui entoure au moins une partie 9 de la première couche conductrice 10. La surface de la partie 9 de la première couche conductrice forme ainsi un motif en dépression par rapport à la surface libre de la première couche de matériau sacrificiel 18a.

Une deuxième couche de matériau sacrificiel 18b est ensuite formée sur la première couche de matériau sacrificiel 18a et sur la partie 9 de couche conductrice laissée découverte. Ainsi, le motif avec une dépression 19 est reproduit à la surface de la deuxième couche de matériau sacrificiel 18b. Cette dépression, visible à la figure 12, est mise à profit dans la suite du procédé pour réaliser une deuxième couche conductrice formant saillie.

Les figures 13 et 14 montrent la formation de la couche de matériau sacrificiel 18 dans un cas où la première électrode 10 formée sur le support 12 forme une proéminence sur cette surface. La proéminence formée par la couche conductrice 10 se retrouve, comme le montre la figure 13, à la surface supérieure de la couche de matériau sacrificiel 18. Elle est indiquée avec la référence 17. Une telle proéminence provoquerait une formation en retrait de la deuxième couche conductrice dans une région située au-dessus de la première région conductrice 10.

Pour éviter ce phénomène, il est possible, comme le montre la figure 14, d'aplanir la surface supérieure de la couche sacrificielle 18 avant la formation de la deuxième couche conductrice.

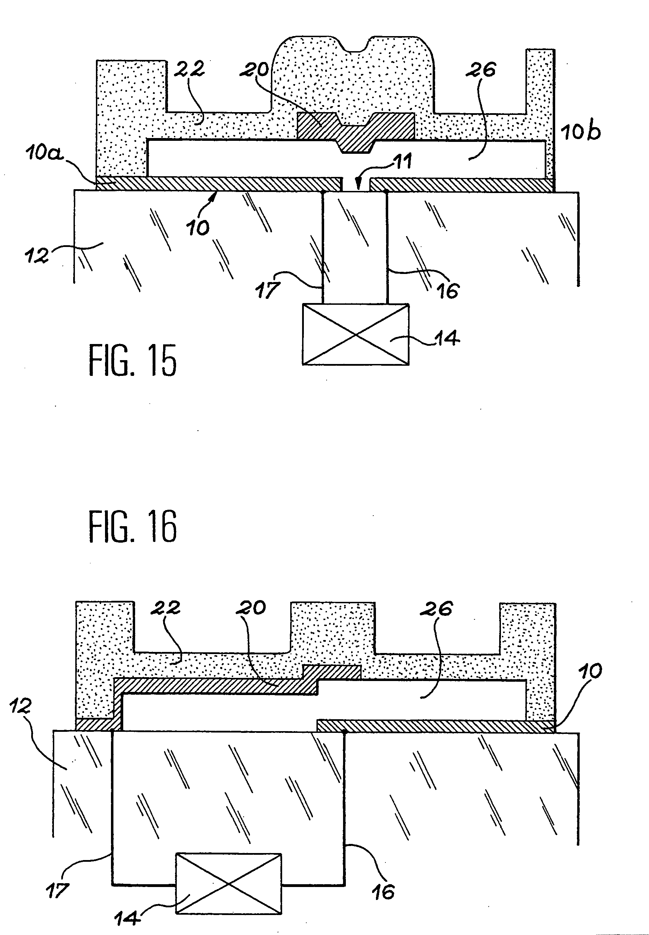

La figure 15 montre, à plus grande échelle, une variante de réalisation d'un microsystème conforme à l'invention. Pour des raisons de simplification des références identiques sont utilisées pour désigner des parties identiques ou similaires à celles des figures précédentes. On peut ainsi se reporter à la description qui précède.

Le microsystème, réalisé sur un substrat 12, comporte une première électrode 10 supportée par ce substrat. La première électrode comporte deux parties 10a et 10b séparées par une rainure 11. Ainsi, les parties 10a et 10b qui sont formées sur un substrat 12 isolant, sont électriquement isolées par le substrat et par la rainure 11. La rainure est située sensiblement au milieu d'une chambre 26 du microsystème, délimitée latéralement et dans sa partie supérieure par une membrane 22 flexible.

Une deuxième électrode 20 fixée à la membrane 22 se situe sensiblement au-dessus d'une région de l'électrode 10 comprenant la rainure 11.

Ainsi, lorsqu'un pression suffisante est exercée sur la membrane 22, l'électrode 20 vient en appui contre les parties 10a et 10b de la première électrode 10 et les relie électriquement.

Le microsystème de la figure 15 peut ainsi être utilisé comme au micro-interrupteur dont les bornes sont les parties 10a et 10b de la première électrode 10.

Le microsystème de la figure 15 peut également être utilisé comme un capteur de pression avec une détection de type tout ou rien.

Les parties 10a et 10b de la première électrode sont respectivement reliées à un circuit 14 intégré dans le substrat 12 sous le microsystème. Ce circuit et les liaisons électriques 16, 17 qui le relient aux parties 10a et 10b de la première électrode sont représentés très schématiquement.

On peut noter également que la membrane 22 est localement amincie pour la rendre plus flexible.

La figure 16 montre encore une autre possibilité de réalisation d'un microsystème utilisable en particulier comme micro-interrupteur.

Les première et deuxième électrodes 10, 20 situées respectivement sur le substrat 12 et la membrane 22 s'étendent respectivement dans une région de chevauchement située sensiblement au milieu de la chambre 26.

La deuxième électrode 20 maintenue initialement écartée de la première électrode 10 par la membrane 22 flexible, vient, sous l'effet d'une pression suffisante exercée sur la membrane 22, en contact avec la première électrode 10, dans la zone de chevauchement.

Ainsi, les première et deuxième électrodes peuvent constituer les bornes d'un interrupteur. Les première et deuxième électrodes sont reliées électriquement à un circuit électronique 14 qui peut être situé par exemple dans le substrat 12.

A cet effet, la deuxième couche de matériau conducteur, dans laquelle est formée la deuxième électrode s'étend de préférence jusque sur le substrat 12.

## Revendications

1. Cellule de capteur de pression comportant :
- un substrat (12) comportant au moins une première électrode (10),
- une membrane déformable isolante (22) fixée par un bord périphérique au substrat et définissant une chambre (26) fermée autour d'au moins une partie de la première électrode (10), et
- une seconde électrode (20) formée sur une paroi de la membrane (22) tournée vers la première électrode (10), la seconde électrode (20) étant maintenue séparée de la première électrode (10) en l'absence de pression exercée sur la membrane (22),
**caractérisée en ce que** les contacts des électrodes (10, 20) sont pris sur une même face de la cellule de capteur, face en contact avec le substrat (12).

2. Cellule de capteur selon la revendication 1, comportant en outre un circuit de mesure électronique (14) intégré dans le substrat (12) et relié aux première et deuxième électrodes (10, 20).

3. Cellule selon la revendication 2, dans laquelle le circuit électronique (14) est disposé dans le substrat (12) sous la première électrode (10).

4. Cellule selon la revendication 1, dans lequel le circuit intégré (14) est du type CMOS ou du type BiCMOS.

5. Cellule selon la revendication 1, dans laquelle la membrane (22) comporte une partie rigide au-dessus de la deuxième électrode (20).

6. Cellule selon la revendication 2, dans laquelle le circuit de mesure comporte des moyens de capacimètre pour mesurer une variation de capacité électrique entre les première et deuxième électrodes (10, 20).

7. Cellule selon la revendication 1, dans laquelle la première électrode (10) comporte une première et une deuxième parties (10a, 10b) séparées par une rainure (11), et dans laquelle la deuxième électrode (20) est située au moins en partie au-dessus de la rainure (11), de façon à être appliquée contre les première et deuxième parties pour les relier électriquement lorsqu'une pression suffisante est exercée sur la membrane (22).

8. Capteur d'empreintes comportant une pluralité de cellules de capteur, selon l'une des revendications 1 à 7, juxtaposées.

9. Capteur selon la revendication 8, dans lequel toutes les cellules sont réalisées sur un même substrat (12).

## Claims

1. Pressure sensor cell comprising:
- a substrate (12) comprising at least one first electrode (10) ;
- an insulating deformable membrane (22) fixed by a peripheral edge to the substrate and defining a chamber (26) closed around at least part of the first electrode (10); and
- a second electrode (20) formed on a wall of the membrane (22) turned towards the first electrode (10), the second electrode (20) being kept separated from the first electrode (10) in the absence of pressure exerted on the membrane (22);
**characterised in that** the contacts of the electrodes (10, 20) are taken from the same face of the sensor cell, the face in contact with the substrate (12).

2. Sensor cell according to Claim 1, furthermore comprising an electronic measurement circuit (14) integrated in the substrate (12) and connected to the first and second electrodes (10, 20).

3. Cell according to Claim 2, in which the electronic circuit (14) is disposed in the substrate (12) under the first electrode (10).

4. Cell according to Claim 1, in which the integrated circuit (14) is of the CMOS type or the BiCMOS type.

5. Cell according to Claim 1, in which the membrane (22) comprises a rigid part above the second electrode (20).

6. Cell according to Claim 2, in which the measurement circuit comprises capacitance metering means for measuring a variation in electrical capacity between the first and second electrodes (10, 20).

7. Cell according to Claim 1, in which the first electrode (10) comprises a first and a second part (10a, 10b) separated by a groove (11), and in which the second electrode (20) is situated at least partly above the groove (11), so as to be applied against the first and second parts in order to connect them electrically when sufficient pressure is exerted on the membrane (22).

8. Fingerprint sensor comprising a plurality of juxtaposed sensor cells according to any one of Claims 1 to 7.

9. Sensor according to Claim 8, in which all the cells are produced on the same substrate (12).

## Patentansprüche

1. Drucksensorzelle, umfassend:
- ein Substrat (12) mit wenigstens einer Elektrode (10),
- eine isolierende verformbare Membran (22), die mit einem peripheren Rand an dem Substrat befestigt ist und um wenigstens einen Teil der ersten Elektrode (10) herum eine Kammer (26) abgrenzt, und
- eine zweite Elektrode (20), ausgebildet auf einer der ersten Elektrode (10) zugewandten Wand der Membran (22), wobei die zweite Elektrode (20) zur ersten Elektrode (10) auf Abstand gehalten wird, wenn auf die Membran (22) kein Druck ausgeübt wird,
**dadurch gekennzeichnet, dass** die Kontakte der Elektroden (10, 20) auf einer selben Seite der Sensorzelle, nämlich der mit dem Substrat (12) in Kontakt befindlichen Seite, erfasst werden.

2. Sensorzelle nach Anspruch 1 mit außerdem einer in das Substrat (12) integrierten und mit der ersten und zweiten Elektrode (10, 20) verbundenen elektronischen Messschaltung (14).

3. Zelle nach Anspruch 2, bei der die elektronische Schaltung (14) in dem Substrat (12) unter der ersten Elektrode (10) angeordnet ist.

4. Zelle nach Anspruch 1, bei der die elektronische Schaltung (14) vom CMOS-Typ oder vom BiCMOS-Typ ist.

5. Zelle nach Anspruch 1, bei der die Membran (22) über der zweiten Elektrode (20) einen steifen Teil umfasst.

6. Zelle nach Anspruch 2, bei der die Messschaltung Kapazitätsmesseinrichtungen zum Messen einer Veränderung der elektrischen Kapazität zwischen der ersten und zweiten Elektrode (10, 20) umfasst.

7. Zelle nach Anspruch 1, bei der die erste Elektrode (10) einen ersten und einen zweiten Teil (10a, 10b) umfasst, getrennt durch eine Nut (11), und bei der die zweite Elektrode (20) sich wenigstens teilweise über der Nut (11) befindet, so dass sie, wenn auf die Membran (22) ein ausreichender Druck ausgeübt wird, gegen den ersten und zweiten Teil gedrückt wird, um sie elektrisch zu verbinden.

8. Sensor für Abdrücke bzw. Fingerabdrücke mit einer Vielzahl nebeneinanderliegender Sensorzellen nach einem der Ansprüche 1 bis 7.

9. Sensor nach Anspruch 8, bei dem alle Zellen auf einem selben Substrat (12) realisiert sind.
